(19) **Europäisches Patentamt / European Patent Office / Office européen des brevets**

(11) **EP 3 972 365 A1**

(12) **EUROPEAN PATENT APPLICATION**
published in accordance with Art. 153(4) EPC

(43) Date of publication:
**23.03.2022 Bulletin 2022/12**

(21) Application number: **20810049.5**

(22) Date of filing: **14.05.2020**

(51) International Patent Classification (IPC):
**H04W 72/04** *(2009.01)*    **H04W 4/06** *(2009.01)*
**H04W 28/04** *(2009.01)*

(52) Cooperative Patent Classification (CPC):
**H04W 4/06; H04W 28/04; H04W 72/04**

(86) International application number:
**PCT/JP2020/019322**

(87) International publication number:
**WO 2020/235452 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.05.2019 JP 2019094078**

(71) Applicant: **NTT DOCOMO, INC.**
**Chiyoda-Ku**
**Tokyo 100-6150 (JP)**

(72) Inventors:
• **NAGATA, Satoshi**
**Tokyo 100-6150 (JP)**
• **WANG, Lihui**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57) The present invention is designed to appropriately perform retransmission control on at least one of broadcast transmission and multicast transmission. A user terminal includes a receiving section that receives given information transmitted by at least one of broadcast and multicast, and a control section that determines a transmission timing for retransmission control information for the given information, based on at least one of a predefined value and information transmitted from a network.

FIG. 4

**Description**

Technical Field

The present disclosure relates to a user terminal and a radio communication method in next-generation mobile communication systems.

Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., also referred to as "5th generation mobile communication system (5G))," "5G+ (plus)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), unicast transmission, broadcast transmission, and multicast transmission are expected to be supported as data transmission methods; in the unicast transmission, individual transmissions are performed for respective user terminals (UEs), and in the broadcast transmission and the multicast transmission, common transmission is performed for a plurality of UEs.

For NR, studies have been conducted about support of retransmission control (for example, HARQ) for at least one of broadcast transmission and multicast transmission. However, sufficient studies have not been conducted yet about how to perform retransmission control for broadcast transmission or multicast transmission.

Thus, an object of the present disclosure is to provide a user terminal and a radio communication method that can appropriately control retransmission for at least one of broadcast transmission and multicast transmission.

Solution to Problem

A user terminal according to one aspect of the present disclosure includes a receiving section that receives given information transmitted by at least one of broadcast and multicast, and a control section that determines a transmission timing for retransmission control information for the given information, based on at least one of a predefined value and information transmitted from a network. Advantageous Effects of Invention

According to one aspect of the present disclosure, retransmission control for at least one of broadcast transmission and multicast transmission can be appropriately performed.

Brief Description of Drawings

FIG. 1 is a diagram to illustrate an example of broadcast/multicast transmission;
FIG. 2 is a diagram to illustrate an example of retransmission control according to a first aspect;
FIG. 3 is a diagram to illustrate another example of the retransmission control according to the first aspect;
FIG. 4 is a diagram to illustrate an example of retransmission control according to a second aspect;
FIG. 5 is a diagram to illustrate an example of retransmission control according to a third aspect;
FIG. 6 is a diagram to illustrate an example of retransmission control according to a fourth aspect;
FIG. 7 is a diagram to illustrate another example of the retransmission control according to the fourth aspect;

FIG. 8 is a diagram to illustrate an example of a schematic structure of a radio communication system according to one embodiment;

FIG. 9 is a diagram to illustrate an example of a structure of a base station according to one embodiment;

FIG. 10 is a diagram to illustrate an example of a structure of a user terminal according to one embodiment; and

FIG. 11 is a diagram to illustrate an example of a hardware structure of the base station and the user terminal according to one embodiment.

Description of Embodiments

For future radio communication systems (for example, NR), unicast transmission, broadcast transmission, and multicast transmission are expected to be supported. In the unicast transmission, individual transmissions of data or a channel may be performed for respective UEs (for example, UE-specific transmission). In at least one of the broadcast transmission and the multicast transmission (hereinafter also referred to as broadcast/multicast transmission), common transmission of data or a channel may be performed for a plurality of UEs (for example, a UE group).

Different channels (each channel being at least one of a logical channel and a physical channel) may be applied to the unicast transmission, the broadcast transmission, and the multicast transmission Alternatively, the same configuration may be applied to the broadcast transmission and to the multicast transmission.

The broadcast/multicast transmission is an effective transmission method in a case where information of the same content is distributed to a plurality of UEs (for example, a given UE group). Thus, the broadcast/multicast transmission is expected to be employed to report information related to, for example, distribution of road conditions, public safety such as statuses of traffic signs and traffic lights, and highway traffic systems **(ITS** (Intelligent Transport Systems)). Alternatively, the broadcast/multicast transmission is expected to be employed to report information to audience in a concert or a stadium.

For NR, retransmission control (for example, HARQ operation) is also considered to be performed for the broadcast/multicast transmission. However, sufficient studies have not been conducted yet about how to perform retransmission control for the broadcast/multicast transmission. In a case where the retransmission control is not appropriately performed, communication quality and the like may be degraded.

The inventors of the present invention studied retransmission control for the broadcast/multicast transmission and came up with the present invention.

Embodiments according to the present disclosure will be described in detail with reference to the drawings as follows. The embodiments may be employed independently or may be employed in combination. For the retransmission control, HARQ-based re-transmission will hereinafter be described as an example, but no such limitation is intended.

The retransmission control for the broadcast transmission may hereinafter be replaced with retransmission control for information transmitted through broadcast. The information transmitted through broadcast may be replaced with at least one of data, a data channel, a DL-SCH, a broadcast channel, control information, DCI, a control channel, and broadcast control information. The retransmission control for the multicast transmission may be replaced with retransmission control for information transmitted through multicast. The information transmitted through multicast may be replaced with at least one of data, a data channel, a DL-SCH, a multicast channel, control information, DCI, a control channel, and multicast control information.

The information transmitted through broadcast/multicast may be included in data (for example, a DL-SCH, a shared channel, or the like) scheduled by using downlink control information (for example, DCI) or included in DCI, or transmitted through higher layer signaling (for example, at least one of RRC signaling and broadcast information) or transmitted in a dedicated signal or channel. In a case where the information transmitted by broadcast/multicast is included in data, the broadcast/multicast transmission may also be applied to DCI used to schedule the data. "Transmission in DCI or higher layer signaling" as used herein may refer to application of at least one of the unicast transmission (or UE-specific information) and the broadcast/multicast transmission (or UE-common transmission).

(First Aspect)

In a first aspect, retransmission control for the broadcast/multicast transmission will be described.

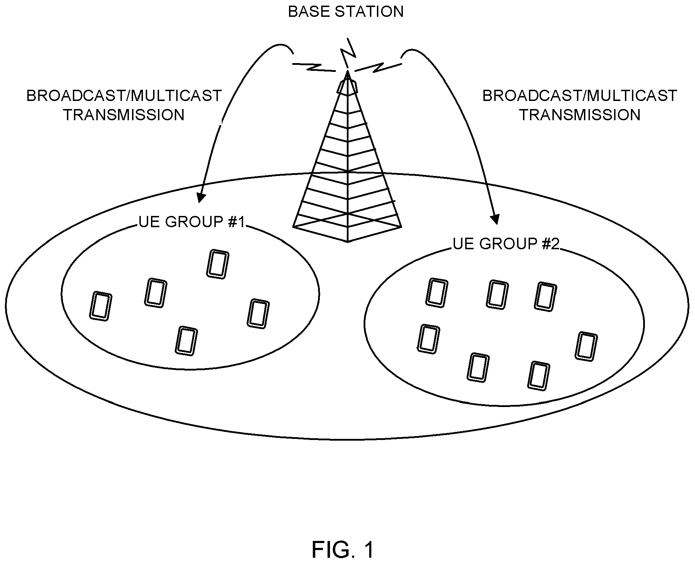

FIG. 1 illustrates an example in which a base station transmits given information to a plurality of UEs (for example, a UE group) by employing at least one of broadcast and multicast (hereinafter also referred to as broadcast/multicast). FIG. 1 here illustrates a case where the base station performs broadcast/multicast transmission to each of UE group #1 and UE group #2. Note that the number of UE groups, UEs constituting each UE group, and the like may be changed as appropriate for application.

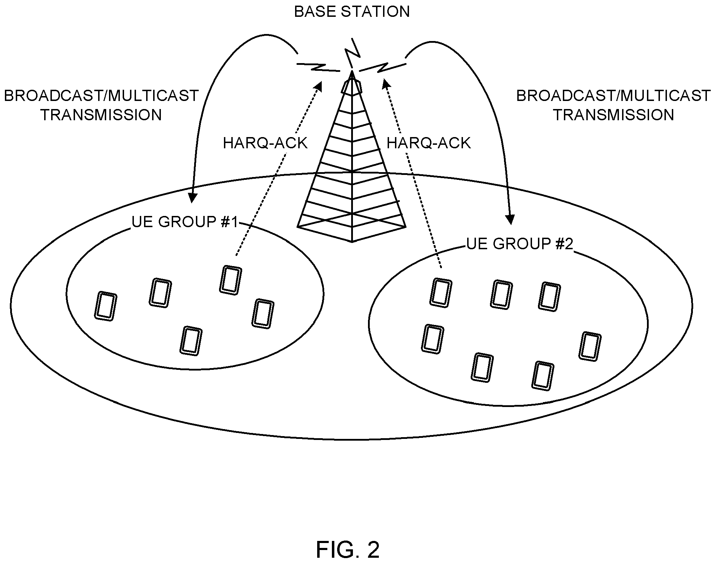

Each UE may determine, based on the given information, whether retransmission control for information transmitted by broadcast/multicast is supported (or whether the retransmission control is applied or configured) (see FIG. 2). The given information may be information reported by employing at least one of higher layer signaling (option 1) and downlink control information (option 2) that are reported from a network (for example, the base station). Alternatively, the UE may determine whether the retransmission control is applied based on a given rule (option 3).

<Option 1>

The UE may determine, based on higher layer signaling, whether the retransmission control for the information transmitted by broadcast/multicast is applied. The base station may employ higher layer signaling to report whether to apply the retransmission control, to each UE or employ higher layer signaling to report whether to apply the retransmission control to each UE group.

In a case where each of the broadcast transmission (for example, transmission employing a broadcasting channel) and the multicast transmission (for example, transmission employing a multicasting channel) is supported, whether to apply the retransmission control for the broadcast transmission and for the multicast transmission and whether to apply the retransmission control for the multicast transmission may be configured separately. Thus, whether to apply the retransmission control can be flexibly controlled.

Alternatively, in a case where each of the broadcast transmission and the multicast transmission is supported, whether to apply the retransmission control for the broadcast transmission and whether to apply the retransmission control for the multicast transmission may be configured commonly. In this case, in a case where whether to apply the retransmission control is configured for one of the broadcast transmission and the multicast transmission, the UE may similarly apply the configuration to the other. This allows configuration of the retransmission control to be simplified.

<Option 2>

The UE may determine, based on downlink control information (for example, DCI or the like), whether the retransmission control for the information transmitted by broadcast/multicast is applied. The base station may employ UE-specific DCI to report, to each UE, whether to apply the retransmission control, or may employ group-common DCI to report, to each UE group, whether to apply the retransmission control. For example, in a case where information transmitted by broadcast/multicast is scheduled using DCI, the DCI may include information related to HARQ-ACK (for example, information regarding at least one of whether to apply HARQ-ACK, a transmission timing for HARQ-ACK, and resources for HARQ-ACK).

In a case where each of the broadcast transmission and the multicast transmission is supported, whether to apply the retransmission control for the broadcast transmission and whether to apply the retransmission control for the multicast transmission may be configured separately. Thus, whether to apply the retransmission control can be flexibly controlled.

Alternatively, in a case where each of the broadcast transmission and the multicast transmission is supported, whether to apply the retransmission control for the broadcast transmission and whether to apply the retransmission control for the multicast transmission may be configured commonly. In this case, in a case where whether to apply the retransmission control is configured for one of the broadcast transmission and the multicast transmission, the UE may similarly apply the configuration to the other. This allows configuration of the retransmission control to be simplified.

<Option 3>

The UE may implicitly determine, based on a given rule, whether the retransmission control for the information transmitted by broadcast/multicast is applied. The given rule may be a given condition configured for transmission or reception (for example, a transmission condition employed for broadcast/multicast transmission). Cases will be described below that include a case in which the given condition is repetition (case 1) and a case in which the given condition is at least one of a modulation and coding scheme (MCS) and a coding rate (case 2). The given condition is not limited to these conditions.

[Case 1]

In a case where the repetition is applied to information transmitted by broadcast/multicast, the UE may determine that the retransmission control (for example, HARQ) is not supported or is not applied. In a case where the repetition is not applied, the UE may determine that the retransmission control is supported or applied.

The UE may determine whether the retransmission control is applied, based on the number of transmissions in the repetition (also referred to as a repetition factor). For example, the UE does not adapt the retransmission control in a case where the number of transmissions in the repetition is equal to or greater than a given value (for example, X), and may otherwise apply the retransmission control (for example, in a case where the number of transmissions is smaller than the given value). The given value (for example, X) may be predefined in specifications or reported from the base station to the UE through higher layer signaling or the like.

Whether the repetition is applied (or the number of transmissions in the repetition) may be configured for each UE group. Alternatively, whether the repetition is applied (or the number of transmissions in the repetition) may be configured for each UE group. In a case where whether the repetition is applied is configured for each UE, whether the retransmission control is applied may be independently configured for each UE included in each UE group.

[Case 2]

The UE may determine whether the retransmission control for the information transmitted by broadcast/multicast is to be applied, based on at least one of the MCS and the coding rate (hereinafter also referred to as the MCS/coding rate) applied to the information transmitted by broadcast/multicast.

For example, the UE does not apply the retransmission control in a case where the MCS/coding rate corresponding to the information transmitted by broadcast/multicast is equal to or smaller than a given value (for example, Y), and may otherwise apply the retransmission control (for example, in a case where the MCS/coding rate is greater than the given value). The given value (for example, Y) may be predefined in the specifications or reported from the base station to the UE through higher layer signaling or the like.

Whether to apply the retransmission control for the broadcast/multicast transmission is thus controlled based on the given condition, enables the retransmission control to be flexibly controlled based on a communication environment or a communication condition.

<HARQ Process>

In HARQ-based re-transmission control, retransmission control is performed on data (transport blocks (TBs) or code blocks (CBs)) by using processes (HARQ processes) as processing units. In an HARQ process with the same number (HARQ process number (HPN)), the same data is retransmitted until ACK is received. The HARQ process number is also referred to as an HARQ process ID (HARQ process identifier).

In one time interval (for example, a slot or a subframe), one HARQ process or a plurality of HARQ processes may be used. By independently processing a plurality of HARQ processes in parallel, data in the succeeding process can be transmitted without waiting for A/N of the preceding HARQ process, hence reducing a delay time.

In the retransmission control for the broadcast/multicast transmission as well, the retransmission control may be performed based on the HARQ processes. For example, X (or X number) (X≥1) HARQ processes may be configured for the information transmitted by broadcast/multicast. The X may be predefined in the specifications or reported from the base station to the UE through at least one of higher layer signaling and downlink control information.

In a case where each of the broadcast transmission and the multicast transmission is supported, X for the broadcast transmission and X for the multicast transmission may be separately configured. A common configuration may be provided for X for the broadcast transmission and X for the multicast transmission. Alternatively, different Xs may be configured for the respective broadcast transmissions (or multicast transmissions).

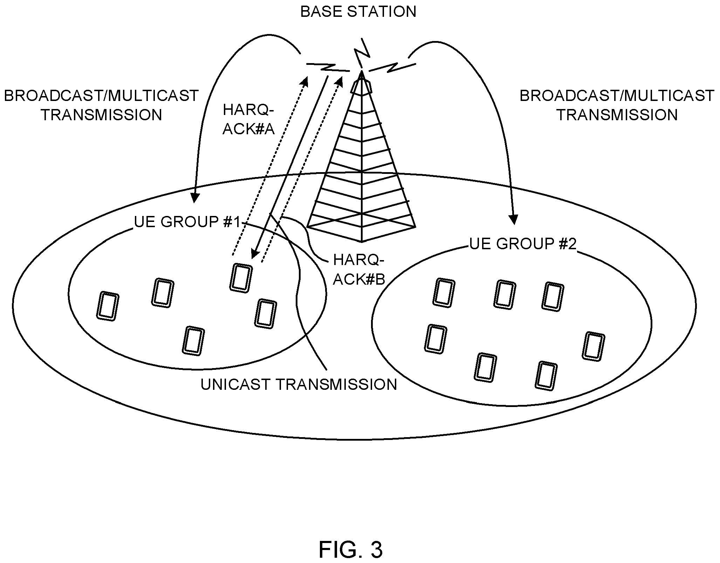

It is considered that the UE transmits an HARQ-ACK for the unicast transmission and an HARQ-ACK for the broadcast/multicast transmission (see FIG. 3). FIG. 3 illustrates an example in which the UE reports HARQ-ACK#B for the broadcast/multicast transmission and HARQ-ACK#A for the unicast transmission.

In this case, an HARQ processes pool corresponding to the information transmitted by unicast transmission may be configured separately from an HARQ processes pool corresponding to the information transmitted by broadcast/multicast. The HARQ processes pool may be a processing operation for an HARQ process, or may be the value of an HARQ process number or the range of HARQ process numbers.

For example, an HARQ process number for unicast transmission (for example, HARQ-ACK #B) may be configured separately from an HARQ process number for broadcast/multicast transmission (for example, HARQ-ACK #A). The UE may control the retransmission of the unicast transmission, based on the HARQ process number for unicast transmission, and may control the retransmission of the broadcast/multicast transmission based on the HARQ process number for broadcast/multicast transmission.

Thus, configuring separate HARQ processes pools for the information transmitted by unicast and for the information transmitted by broadcast/multicast, allows avoidance of a collision between the HARQ process of the unicast transmission and the HARQ process of the broadcast/multicast transmission.

Alternatively, the HARQ processes pool corresponding to the information transmitted by unicast transmission may be shared by the HARQ processes pool corresponding to the information transmitted by broadcast/multicast.

In this case, a common HARQ process number(s) (for example, an X HARQ process(es)) may be applied for the HARQ process(es) for unicast transmission and for the HARQ process(es) for broadcast/multicast transmission.

The network (for example, the base station) may control the HARQ process processing to prevent a collision of the HARQ process between the information transmitted by unicast and the information transmitted by broadcast/multicast. For example, at least one of the base station and the UE may perform control to avoid allocating an HARQ process number allocated to one of the unicast transmission and the broadcast/multicast transmission to the other.

Alternatively, priorities (for example, a priority rule) may be configured for the HARQ processes, and in a case where a collision occurs among the HARQ processes, the retransmission control may be performed based on the priorities. For example, the broadcast/multicast transmission may have a higher priority than the unicast transmission. In a case where an HARQ process corresponding to the unicast transmission collides with an HARQ process corresponding to the broadcast/multicast transmission, the UE may perform the retransmission control with a higher priority given to the HARQ process corresponding to the broadcast/multicast transmission.

The priorities of the HARQ processes may be configured based on another condition. For example, the priorities of the HARQ processes may be determined based on services (or traffic types). As an example, the priority of an HARQ process corresponding to a first traffic type (for example, URLLC) may be set higher than the priority of an HARQ process corresponding to a second traffic type (for example, eMBB).

Note that in a case where the number of HARQ processes is 1 (X = 1), information specifying the HARQ process number need not be included in scheduling information. For example, for X = 1, in DCI used to schedule at least one of control information and data transmitted by multicast/broadcast, a field for HARQ process reporting may be omitted or employed for any other purpose. Otherwise (X > 1), in the DCI, an n-bit (for example, $n = \log_2(X)$) field may be configured, and HARQ process IDs corresponding to multicast/broadcast transmission may be reported.

<Soft Buffer>

The UE may include a buffer in which received data having failed to be decoded is temporarily stored (soft buffer). In the soft buffer, the received data (for example, TBs, code blocks, or a code block group (CBG) including one or more code blocks) may be stored for each HPN.

The UE may soft-combines received pieces of data (or retransmitted data) with the same HPN in repetition. The user terminal may soft-combine the pieces of data stored in the soft buffer with the received data with the same HPN. The soft combining refers to allocating the same HPN to a plurality of pieces of data generated from the same information bit sequence and transmitting the plurality of data, with a recipient combining the plurality of data with the same HPN.

A configuration may be such that a UE-side soft buffer for information transmitted by unicast is shared as a UE-side soft buffer for information transmitted by broadcast/multicast. In this case, even in a case where decoding of one of the transmissions consecutively fails, the soft buffer can be effectively utilized.

Alternatively, the UE-side soft buffer for information transmitted by unicast and the UE-side soft buffer for information transmitted by broadcast/multicast may be configured separately. For example, in the UE, besides the soft buffer utilized for unicast transmission, the soft buffer for broadcast/multicast transmission may be configured. This allows suppression of the adverse effect of a failure in decoding of one of the transmissions on the soft buffer for the other transmission.

(Second Aspect)

In a second aspect, feedback control for a delivery conformation signal (or also referred to as a retransmission control signal or an HARQ-ACK) for the broadcast/multicast transmission will be described.

<HARQ-ACK Transmission Timing>

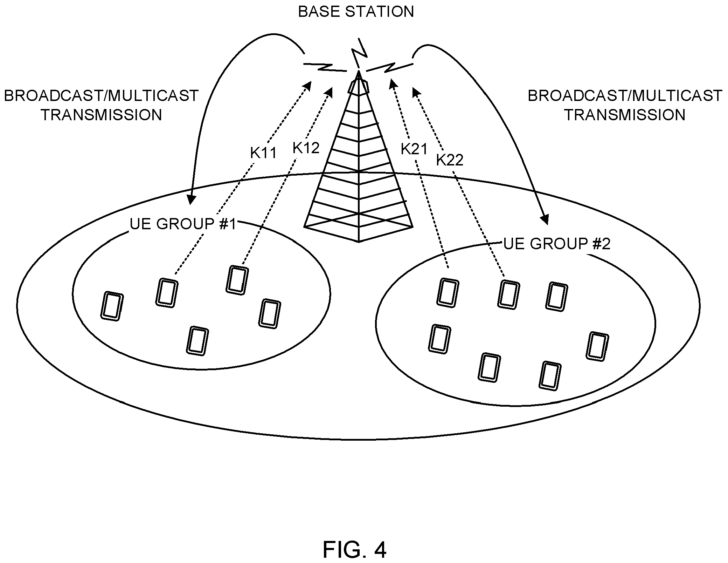

The UE feeds back, at a given timing (for example, $K_1$), the HARQ-ACK corresponding to the information transmitted by broadcast/multicast (see FIG. 4). FIG. 4 illustrates a case where UEs included in UE group #1 feed back the HARQ-ACK at given timings (for example, $K_{11}$ and $K_{12}$), and UEs included in UE group #2 feed back the HARQ-ACK at given timings (for example, $K_{21}$ and $K_{22}$).

The given timings may be defined by fixed values or reported from the network (for example, the base station). For example, the UE may apply at least one of options 2-1 to 2-3 described below, to determine the HARQ-ACK transmission timings.

<Option 2-1>

One timing value (one value) may be applied as a transmission timing at which the HARQ-ACK is transmitted for the broadcast/multicast transmission. The one timing value may be defined in the specifications or reported from the base station to the UE through higher layer signaling or the like. The UE may determine, based on the one timing value (for example, a fixed value $K_1$), a transmission timing at which the HARQ-ACK is transmitted for the broadcast/multicast transmission.

For example, in FIG. 4, the following may be satisfied: $K_{11} = K_{12} = K_{21} = K_{22} = $ fixed value $K_1$. Alternatively,

one timing value may be configured for each UE group. For example, in FIG. 4, the following may be satisfied: $K_{11} = K_{12} =$ fixed value $K_A$, $K_{21} = K_{22} =$ fixed value $K_B$.

A HARQ-ACK feedback timing (for example, the same value) may be commonly configured for a plurality of UEs included in a given UE group receiving information transmitted by broadcast/multicast. For example, in FIG. 4, at least the following may be satisfied: $K_{11} = K_{12} = K_{21} = K_{22}$. The same feedback timing can be used for HARQ-ACKs from a plurality of UEs included in a given UE group.

Alternatively, the HARQ-ACK feedback timing (for example, a different value) may be configured independently for the plurality of UEs included in the given UE group receiving information transmitted by broadcast/multicast. For example, in FIG. 4, at least the following may be satisfied: $K_{11} \neq K_{12}$, $K_{21} \neq K_{22}$. In this case, the feedback timings for the HARQ-ACKs from the plurality of UEs included in the given UE group can be dispersed. Note that the same value is configured for some of the plurality of UEs included in the given group, whereas different values may be configured for the other UEs.

<Option 2-2>

A configuration may be employed in which a set of HARQ-ACK transmission timing values for the broadcast/multicast transmission (or also referred to as a combination of transmission timing values, a plurality of transmission timing candidates, and a transmission timing candidate set) are configured, and a specific transmission timing value is selected from the set. The set of HARQ-ACK transmission timing values may be predefined in the specifications or reported from the base station to the UE through higher layer signaling or the like.

Furthermore, the base station may transmit, to the UE, information specifying a specific transmission timing value from the set of HARQ-ACK transmission timing values. For example, the base station may include, in the downlink control information, the information specifying the specific transmission timing value, and then transmit the downlink control information to the UE. The UE may determine the HARQ-ACK transmission timing value, based on bit information included in the downlink control information.

The downlink control information (for example, a group common PDCCH) may be transmitted to a plurality of UEs (for example, the UEs included in the given group). In this case, all the UEs included in the given group can employ the same timing to feed back HARQ-ACKs.

<Option 2-3>

The base station may configure a first transmission timing parameter (for example, an offset (for example, T_delta or $\Delta T$)) for the HARQ-ACK transmission timing for each UE. For example, the base station may employ higher layer signaling or the like to configure, for the UE, the offset for the HARQ-ACK transmission timing. In this case, the offset (for example, a different offset) may be separately configured for each UE, or the offset may be configured for each group (for example, a common offset may be configured for the given group).

Furthermore, the base station may utilize the downlink control information or the like to report, to the UE, information related to a second transmission timing parameter (for example, the HARQ-ACK transmission timing). For example, the base station may utilize DCI (or a PDCCH) used to schedule the broadcast/multicast transmission or group common DCI (or group common PDCCH) to report the same transmission timing (for example, $K_1$) to a plurality of UEs. Alternatively, the base station may employ UE-specific DCI (or UE-specific PDCCH) to separately report a transmission timing to each UE.

Each UE determines the HARQ-ACK transmission timing (for example, $K_1 + T\_delta$), based on the first transmission timing parameter (for example, T_delta) reported through higher layer signaling and the second transmission timing parameter reported in the DCI (for example, the transmission timing $K_1$). Thus, with at least one of the first parameter and the second parameter (for example, the offset) reported as UE-specific information, the UEs can flexibly control transmission timings even in a case where the other of the parameters is configured as a UE group common parameter.

Note that the HARQ-ACK transmission timing for the unicast transmission may be configured separately from the HARQ-ACK transmission timing for the broadcast/multicast transmission (for example, by using different methods). This enables the HARQ-ACK feedback timing to be flexibly controlled depending on each transmission.

<HARQ-ACK Feedback Resources>

The UE may determine, based on given information, at least one of a resource and a format utilized for the HARQ-ACK feedback for the broadcast/multicast transmission (hereinafter also referred to as the resource/format). For example, the UE may apply at least one of options 3-1 to 3-3 described below to determine the resource/format for the HARQ-ACK. Note that, for the HARQ-ACK transmission timing, one of options 2-1 to 2-3 described above may be applied.

<Option 3-1>

The base station may employ higher layer signaling to report, to each UE, information related to the resource/format for a given channel (for example, a PUCCH) employed for the HARQ-ACK transmission. The resource/format for the PUCCH reported to each UE (for example, a different resource/format may be separately configured for each UE.

Alternatively, the base station may employ higher layer signaling to report, to each UE group, the information related to the resource/format for the PUCCH employed for the HARQ-ACK transmission. In other words, the resource/format for the PUCCH may be configured in UE group units. In this case, the UEs included in the same group may employ the same resource/format to transmit the

HARQ-ACK.

In option 3-1, the UE can determine the resource/format employed for the HARQ-ACK transmission, based on the information reported through higher layer signaling (without employing L1 signaling).

<Option 3-2>

The base station may employ higher layer signaling to report a first resource/format parameter to each UE. The first resource/format parameter may be information related to a resource index (for example, PUCCH_index) for a given channel (for example, a PUCCH) employed for the HARQ-ACK transmission. The resource/format for the PUCCH (for example, a different resource index) may be separately configured for each UE.

The base station may configure a plurality of sets of PUCCH resources (also referred to as a plurality of PUCCH resource candidate sets) for the UE through higher layer signaling. Furthermore, the base station may include, in the downlink control information, information specifying a specific set from among the plurality of sets, and then transmit the downlink control information to the UE. The specific set may be referred to as a second resource/format parameter.

For example, the base station may employ the DCI (or the PDCCH) used to schedule the broadcast/multicast transmission or the group common DCI (or group common PDCCH) to report the specific set to a plurality of UEs. Alternatively, the base station may employ UE-specific DCI (or UE-specific PDCCH) to separately report a specific set to each UE.

Each UE may determine the PUCCH resource/format, based on the first resource/format parameter reported through higher layer signaling and the second resource/format parameter specified by employing at least one of DCI and higher layer signaling. For example, the UE determines the PUCCH resource/format from the specific PUCCH resource set specified by the downlink control information, based on the PUCCH resource index reported through higher layer signaling.

Thus, with at least one of the first resource/format parameter and the second resource/format parameter (for example, the PUCCH resource index) reported in a UE-specific manner, the UEs can employ different PUCCH resources even in a case where the other of the parameters is configured in a UE group common manner.

<Option 3-3>

The base station may configure a plurality of PUCCH resources (also referred to as PUCCH resource candidates) for the UE through higher layer signaling. Furthermore, the base station may transmit, to UEs (for example, a plurality of UEs included in a given group), downlink control information including information specifying a specific PUCCH resource from among a plurality of PUCCH resources. The downlink control information may be DCI transmitted on a group common PDCCH or DCI used to schedule broadcast/multicast transmission.

In this case, the same PUCCH resource may be specified for a plurality of UEs included in the given group.

(Third Aspect)

In a third aspect, description will be given of transmission power control on an uplink channel (for example, at least one of the PUCCH and PUSCH) employed for the HARQ-ACK transmission for the broadcast/multicast transmission. Note that the PUCCH will be described below as the uplink channel employed to transmit the HARQ-ACK but that the third aspect may be similarly applied to any other uplink channel (for example, a PUSCH).

<UL Transmission Power Control>

In Rel. 15, the UE performs transmission power control (TPC) on each transmission opportunity i. The transmission opportunity i may be a transmission opportunity for the PUSCH, the PUCCH, an SRS, or a PRACH. The transmission opportunity i may be defined by a slot index $n_{s,f}^{\mu}$ for a subcarrier spacing configuration $\mu$ in a frame with a system frame number (SFN), the first symbol (the index of the first symbol on the transmission opportunity i) S in the slot, and the number of consecutive symbols L.

The transmission power of the PUCCH is controlled based on a TPC command (also referred to as a value, an increase/decrease value, a correction value, an instruction value, and so on) indicated by the value of a given field (also referred to as a TPC command field, a first field, and so on) in the DCI.

For example, Equation (1) below may represent the transmission power of the PUCCH ($P_{PUCCH, b,f,c}$ (i,$q_u$,$q_d$,l)) on a transmission occasion (also referred to as a transmission period and so on) i for BWP b of a carrier f of a cell c using an index I for a power control adjustment state.

Here, for the power control adjustment state, a higher layer parameter may be used to configure a plurality of states (for example, two states) or a single state. In a case where a plurality of power control adjustment states are configured, an index I (for example, $I \in \{0, 1\}$) may be used to identify one of the plurality of power control adjustment states. The power control adjustment state may be referred to as a PUCCH power control adjustment state, a first or second state, and so on.

The transmission occasion i for the PUCCH is a given period when the PUCCH is transmitted, and may be constituted of, for example, one or more symbols, one or more slots, or the like.

[Math. 1]

Equation (1)

$$P_{\text{PUCCH}b,f,c}(i,q_u,q_d,l) = \min\left\{\begin{array}{l} P_{\text{CMAX},f,c}(i), \\ P_{\text{O\_PUCCH}b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array}\right\}$$

In Equation (1), $P_{CMAX,f,c}(i)$ is, for example, the transmission power (also referred to as the maximum transmission power and so on) of the user terminal configured for the carrier f of the cell c on the transmission occasion i. $P_{O\_PUCCH,b,f,c}(q_u)$ is, for example, a parameter (also referred to as, for example, a parameter related to a transmission power offset, a transmission power offset P0, a target received power parameter, or the like) related to target received power configured for the BWP b of the carrier f of the cell c on the transmission occasion i.

$M^{PUCCH}_{RB,b,f,c}(i)$ is, for example, the number of resource blocks (bandwidth) allocated to the PUCCH for the transmission occasion i in the uplink BWP b of the carrier f of the cell c and the subcarrier spacing $\mu$. $PL_{b,f,c}(q_d)$ is, for example, a path loss calculated by the user terminal by using an index $q_d$ for a reference signal for a downlink BWP associated with the uplink BWP b of the carrier f of the cell c.

$\Delta_{F\_PUCCH}(F)$ is a higher layer parameter provided for each PUCCH format. $\Delta_{TF,b,f,c}(i)$ is a transmission power adjustment component (offset) for the uplink BWP b of the carrier f of the cell c.

$g_{b,f,c}(i,l)$ is a value (for example, the power control adjustment state or an accumulated value for the TPC command) based on a TPC command with the power control adjustment state index I for the uplink BWP of the carrier f of the cell c and the transmission occasion i. For example, the accumulated value for the TPC command may be expressed by a given equation.

The TPC command may be determined based on a value in a given field (also referred to as a TPC command field, a first field, and so on) in the DCI employed to schedule the PUSCH or the PDSCH. The power control information may be referred to as the TPC command (also referred to as the value, the increase/decrease value, the correction value, the instruction value, and so on).

Note that Equation (1) is only illustrative and that no such limitation is intended. The user terminal may control the transmission power for the PUCCH, based on at least one of the parameters illustrated in Equation (1), and additional parameters may be provided or some of the parameters may be omitted. In Equation (1) described above, the transmission power for the PUCCH is controlled for each BWP of a given carrier of a given cell, but no such limitation is intended. The cell, carrier, BWP, and power control adjustment state may be at least partly omitted.

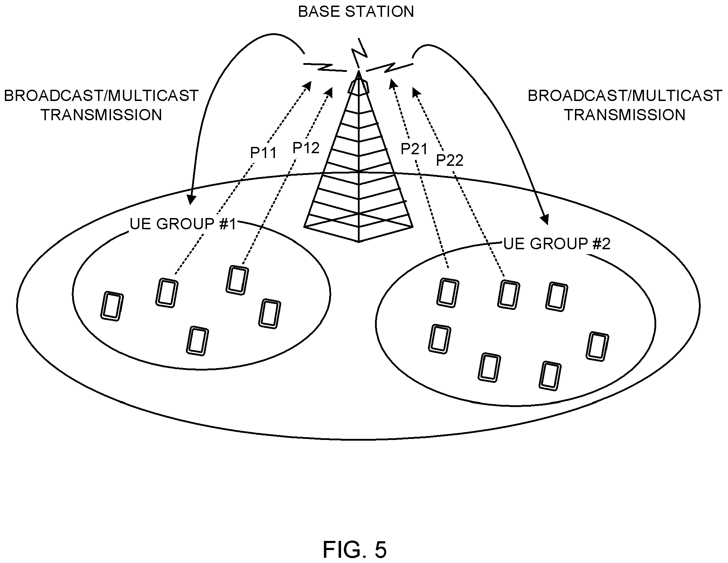

The UE applies given transmission power (or a given transmission power parameter) to the PUCCH employed to feed back the HARQ-ACK for the broadcast/multicast transmission (see FIG. 5). FIG. 5 illustrates a case where UEs included in UE group #1 feed back the HARQ-ACK on the PUCCH to which given transmission power (for example, $P_{11}$ and $P_{12}$) is applied, and UEs included in UE group #2 feed back the HARQ-ACK on the PUCCH to which given transmission power (for example, $P_{21}$ and $P_{22}$) is applied.

The UE may determine the given transmission power, based on given information. For example, the UE may apply at least one of options 4-1 and 4-2 described below to determine the transmission power.

<Option 4-1>

The UE may determine the transmission power for the PUCCH, based on a parameter configured through higher layer signaling (also referred to as a transmission power parameter). The parameter configured through higher layer signaling may be a parameter included in Equation (1) described above (for example, a combination of P0 and $\alpha$) or any other parameter.

The transmission power parameter (for example, a different transmission power parameter) may be separately configured for each of a plurality of UEs included in a given UE group to which the same information is transmitted by broadcast/multicast transmission. In other words, the transmission power parameter may be configured independently for each of the UEs. For example, in FIG. 5, $P_{11}$ and $P_{12}$ (or $P_{21}$ and $P_{22}$) are separately configured.

The transmission timing value may be separately configured for each of the plurality of UEs included in the given UE group to which the same information is transmitted by broadcast/multicast transmission. Thus, the transmission power control can be flexibly performed with interference between different UEs taken into account.

<Option 4-2>

The base station may employ higher layer signaling to configure the first transmission power parameter for each UE. A common first transmission power parameter may be configured for a plurality of UEs (for example, a UE group), or the first transmission power parameter (for example, a different transmission power parameter) may be separately configured for each UE. The first transmission power parameter may be a power offset (for example, P_delta, or P$\Delta$), for example.

The base station may employ at least one of higher layer signaling and DCI to report the second transmission power parameter to the UE. The second parameter may be a power control value (for example, P_M or $P_M$). For example, the base station may employ higher layer signaling to configure a set of second transmission power parameters (for example, a plurality of second parameter candidate values or a second parameter candidate set) for the UE and employ the DCI to report a specific second parameter to the UE.

For example, the base station may employ the DCI (or the PDCCH) used to schedule the broadcast/multicast transmission or the group common DCI (or group common PDCCH) to report the specific second parameter to a plurality of UEs. Alternatively, the base station may employ UE-specific DCI (or UE-specific PDCCH) to separately report the specific second parameter to each UE.

Each UE may adjust the transmission power for the PUCCH, based on the first transmission power parameter reported through higher layer signaling and the second transmission power parameter specified by employing at least one of DCI and higher layer signaling (for example, P_delta + P_M).

Thus, with at least one of the first power parameter and the second power parameter (for example, P_delta) reported in a UE-specific manner, the UEs can employ different types of transmission power even in a case where the other of the parameters is configured in a UE group common manner.

<Option 4-3>

Each UE may adjust the transmission power for the PUCCH, based on the TPC command. For example, the UE may determine the transmission power for the PUCCH by taking the TPC command further into account in addition to options 4-1 and 4-2.

The TPC command may be included in the DCI used to schedule the broadcast/multicast transmission. Alternatively, the TPC command may be included in another DCI different from the DCI used to schedule the broadcast/multicast transmission. The DCI used to transmit the TPC command may be transmitted in UE-specific DCI or DCI common to a given UE group (for example, the group common PDCCH).

(Fourth Aspect)

In a fourth aspect, HARQ-ACK transmission control for the broadcast/multicast transmission will be described.

In HARQ-based re-transmission control, the UE transmits an ACK in a case of succeeding in data receiving processing (for example, decoding) and transmits a NACK in a case of failing in data receiving processing. As retransmission control for information transmitted by broadcast/multicast, the UE may apply at least one of options 5-1 and 5-2 described below.

<Option 5-1>

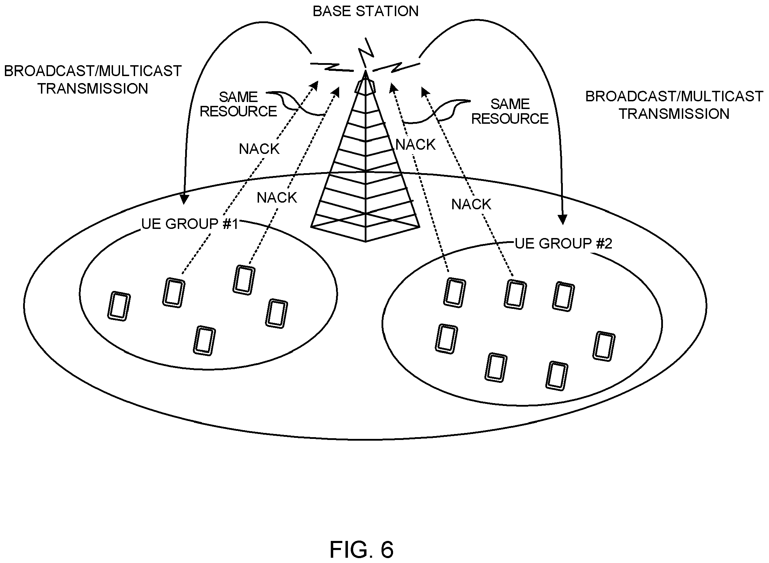

As the HARQ-ACK for the broadcast/multicast transmission, the UE may perform control to provide only one of the reports (for example, the NACK). For example, the UE may perform control to report the NACK in a case where the decoding processing executed for the information transmitted by broadcast/multicast has failed, and to refrain from reporting the ACK in a case of succeeding in the decoding processing (see FIG. 6).

FIG. 6 illustrates a case in which UEs included in UE group #1 transmit the NACK in a case of failing in decoding of information transmitted by broadcast/multicast, whereas UEs included in UE group #2 transmit the NACK in a case of failing in decoding of information transmitted by broadcast/multicast. Note that, in a case where the decoding is successful, control may be performed to refrain from transmitting the ACK.

The base station may determine that data reception has been successful in UEs not reporting the NACK. Detection of the NACK in the base station may be based on power (the detection is also referred to as energy detection). For example, the base station may detect the NACK by employing a mechanism similar to the mechanism of detection of a scheduling request (SR) transmitted on the

PUCCH.

Resources for the NACK reported by each UE may be shared among a plurality of UEs. In other words, the UEs transmitting the NACK for the broadcast/multicast transmission may transmit the NACK by employing the same UL channel resources (for example, PUCCH resources). The resources for NACK reporting may be predefined in the specifications or reported from the base station to each UE (or each UE group) by employing at least one of downlink control information and higher layer signaling.

For example, in FIG. 6, in a case where a plurality of UEs included in UE group #1 transmit the NACK, the UEs may employ the same UL channel resources (for example, resources that are identical in the time domain and the frequency domain) to transmit the NACK. Likewise, in a case where a plurality of UEs included in UE group #2 transmit the NACK, the UEs may employ the same UL channel resources (for example, resources that are identical in the time domain and the frequency domain) to transmit the NACK.

By thus configuring, for a plurality of UEs (for example, the same UE group), common resources for NACK reporting, the usage efficiency of resources can be improved.

The base station may perform retransmission control (for example, determination of whether to perform re-transmission), based on whether NACK reporting is detected in the NACK resources. For example, it is assumed that the base station detects the NACK in the resources configured for UE group #1. This means that at least one UE in UE group #1 (UE for which transmission has been performed by broadcast/multicast) has failed in decoding.

In this case, the base station may retransmit information (for example, transport blocks) by broadcast/multicast transmission. The UE may control whether to receive the retransmitted information, based on a reception status of the UE itself. For example, the UEs having reported the NACK perform control to receive the retransmitted information. On the other hand, the UEs having reported no NACK (for example, the UEs having succeeded in decoding) may skip the reception processing (for example, decoding) for the retransmitted information.

By thus controlling whether to receive the retransmitted information, based on the reception status, an increase in the load on the reception processing of each UE can be suppressed.

Note that the case where only the NACK is reported has been described but that no such limitation is intended. A configuration in which only the ACK is transmitted may be employed.

<Option 5-2>

As the HARQ-ACK for the broadcast/multicast transmission, the UE may perform control to report at least one of the ACK and the NACK. For example, the UE may perform control to report the NACK in a case where the decoding processing executed on the information transmitted by broadcast/multicast has failed, and to report the ACK in a case of succeeding in the decoding processing. Alternatively, as is the case with option 5-1 described above, the UE may perform control to report the NACK in a case where the decoding processing fails, and to refrain from reporting the ACK in a case of succeeding in the decoding processing.

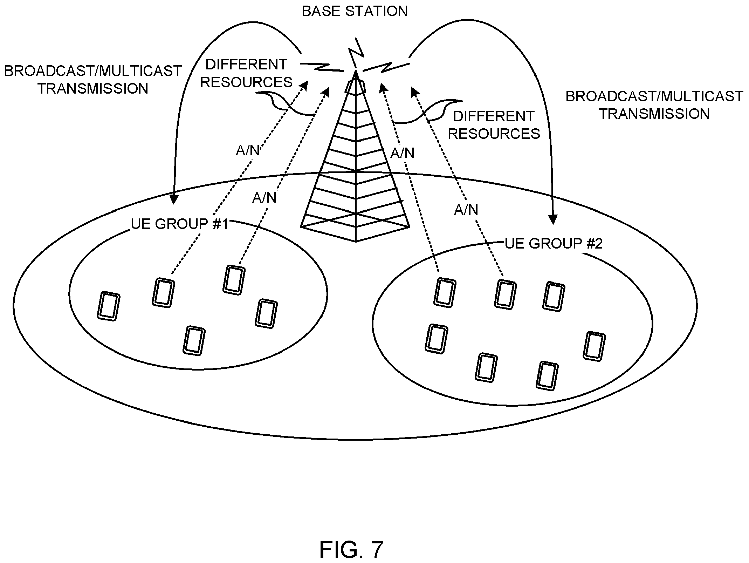

The resources employed by each UE to report at least one of the ACK and the NACK (hereinafter also referred to as the ACK/NACK) may be separately configured for each UE (for example, in a UE-specific manner) (see FIG. 7). FIG. 7 illustrates a case in which the UEs included in UE group #1 transmit the ACK/NACK for the broadcast/multicast transmission by using different resources, and the UEs included in UE group #2 transmit the ACK/NACK for the broadcast/multicast transmission by using different resources. Note that the UE may report only the NACK (perform reporting only in a case where decoding has failed).

As described above, different resources for ACK/NACK reporting (for example, resources differing in at least one of the time domain and the frequency domain) may be configured for the plurality of respective UEs belonging to the same UE group. The resources for ACK/NACK reporting may be reported from the base station to each UE by employing at least one of downlink control information and higher layer signaling.

The base station may perform retransmission control (for example, determination of whether to perform retransmission) for each UE, based on whether the ACK/NACK is detected in the resources configured for the UE. For example, the base station may perform retransmission exclusively to the UEs having reported the NACK. In this case, the base station may employ the unicast transmission to selectively retransmit, to given UEs, retransmission information (for example, transport blocks) for the information transmitted by broadcast/multicast.

Thus, retransmission can be performed exclusively on the UEs having failed in decoding the information transmitted by broadcast/multicast. As a result, the UEs having succeeded in decoding need not receive the retransmitted information, thus allowing suppression of an increase in the load on the reception processing of the UEs.

Note that the base station may determine a method for retransmission, based on the number of UEs having transmitted the NACK (or the number of UEs having transmitted the ACK). For example, in a case where the number of UEs having reported the NACK is equal to or greater than a given value (or the number of UEs having reported the ACK is less than the given value), retransmission may be performed by broadcast/multicast transmission. In this case, the UEs having reported no NACK (or the UEs having reported the ACK) may skip the reception processing (for example, decoding) for the retransmitted information.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

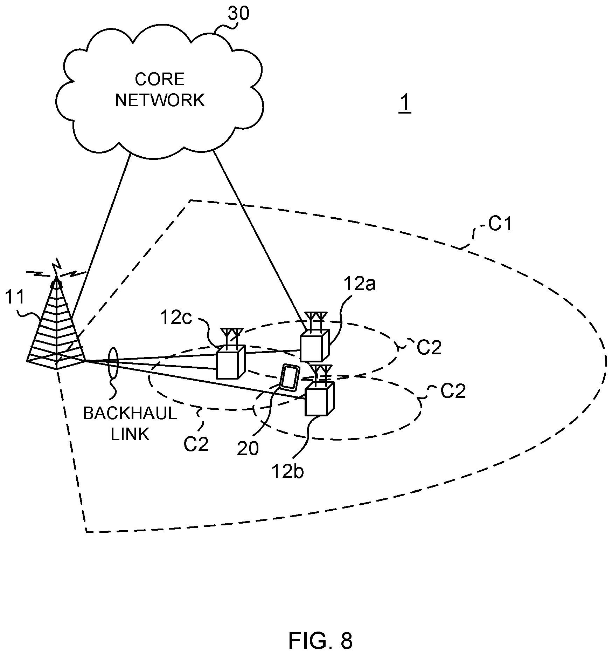

FIG. 8 is a diagram to illustrate an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect illustrated in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

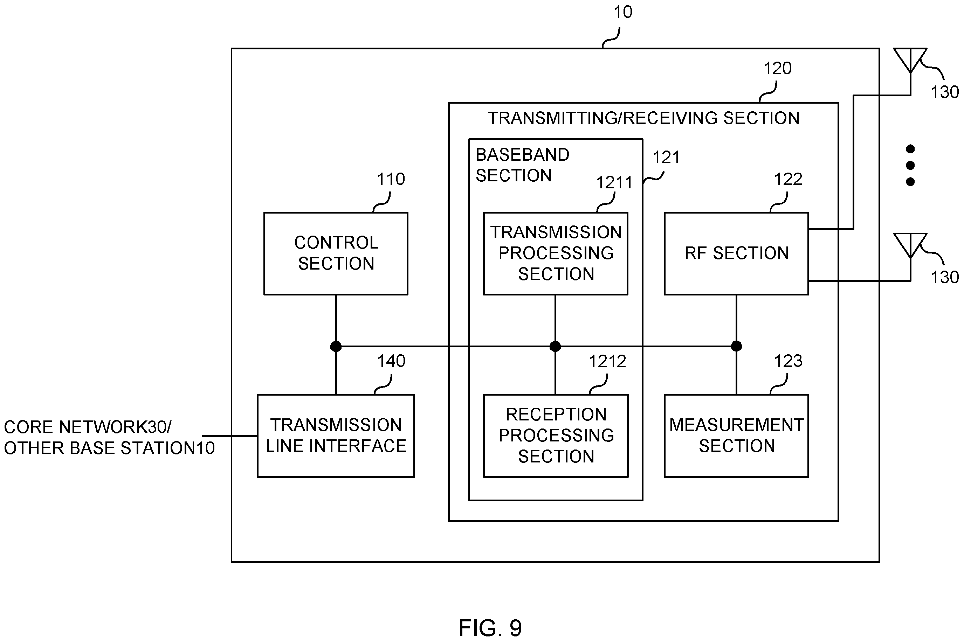

FIG. 9 is a diagram to illustrate an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily illustrates functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam foaming (for example, precoding), analog beam foaming (for example, phase rotation), and so on.

The transmitting/receiving section 120 (transmission processing section 1211) may performs the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 employs at least one of broadcast and multicast to transmit given information. The transmitting/receiving section 120 may receive retransmission control information for given information transmitted by employing at least one of broadcast and multicast.

The control section 110 may perform control to configure, for the UE, whether to apply retransmission control for the given information transmitted by employing at least one of broadcast and multicast.

The control section 110 may perform control to configure, for the UE, a transmission timing for the retransmission control for the given information transmitted by employing at least one of broadcast and multicast.

The control section 110 may perform control to configure, for the UE, transmission power for the retransmission control for the given information transmitted by employing at least one of broadcast and multicast.

The control section 110 may perform control to configure, for the UE, resources for the retransmission control for the given information transmitted by employing at least one of broadcast and multicast.

(User Terminal)

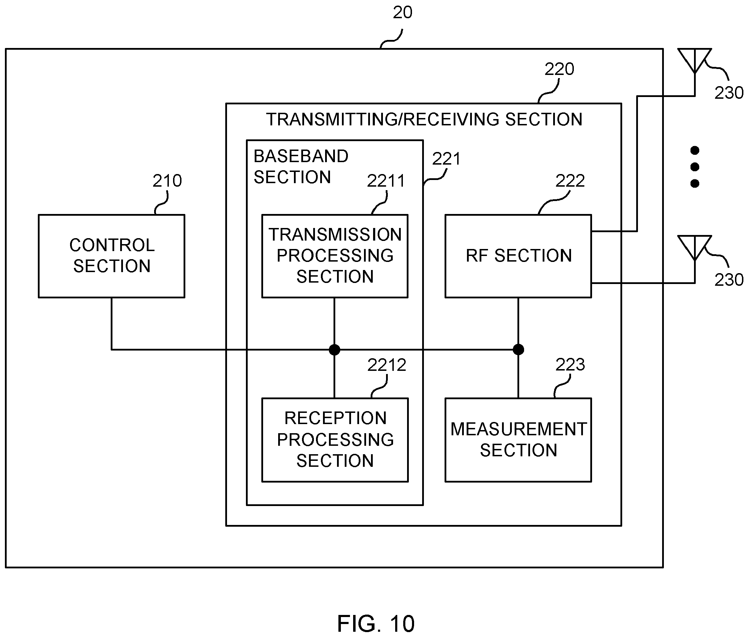

FIG. 10 is a diagram to illustrate an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily illustrates functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam foaming (for example, precoding), analog beam foaming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 receives given information transmitted by at least one of broadcast and multicast. The transmitting/receiving section 220 may transmit retransmission control information for the given information transmitted by employing at least one of broadcast and multicast.

The control section 210 may determine whether to transmit retransmission control information for the given information, based on at least one of information transmitted from the network and a condition applied to transmission of the given information. For example, the control section 210 may determine whether to transmit retransmission control information for the given information, based on at least one of whether to apply repetition for the given information, an MCS applied to the given information, and a coding rate applied to the given information. The control section 210 may assume that common numbers are configured as process numbers employed for retransmission control for the given information and as process numbers employed for retransmission control for the information transmitted by unicast. The control section 210 may assume that process numbers employed for retransmission control for the given information and process numbers employed for retransmission control for the information transmitted by unicast are configured separately.

The control section 210 may determine the transmission timing for the retransmission control information for the given information, based on at least one of a predefined value and information transmitted from the network. The control section 210 may select a given transmission timing, based on information related to a candidate set of transmission timings for the retransmission control information for the given information and downlink control information commonly transmitted to given user terminals. The control section 210 may determine the transmission timing for the retransmission control information for the given information, based on a first transmission timing parameter reported through higher layer signaling and a second transmission timing parameter reported in the downlink control information. The control section 210 may determine a resource employed to transmit the retransmission control information for the given information, based on a first resource parameter reported through higher layer signaling and a second resource parameter specified by employing at least one of higher layer signaling and downlink control information. The control section 210 may select a given resource, based on a candidate set of resources employed for transmission of the retransmission control information for the given information and downlink control information commonly transmitted to given user terminals.

The control section 210 may determine transmission power for an uplink channel employed to transmit the retransmission control information for the given information, based on a transmission power parameter reported for each user terminal. The control section 210 may assume that at least one of the value of the transmission power parameter and the transmission timing for the retransmission control information is separately configured for each user terminal. The control section 210 may determine transmission power, based on a first transmission power parameter reported through higher layer signaling and a second transmission power parameter specified by employing at least one of higher layer signaling and downlink control information. The control section 210 may determine the transmission power, based on a transmission power control command included in downlink control information different from the downlink control information used to schedule the given information.

The control section 210 may control reporting of the retransmission control information for the given information by employing a resource commonly configured for a plurality of user terminals. The control section 210 may perform control to report only one of the ACK and NACK as retransmission control information. The control section 210 may determine whether to receive retransmitted information, based on a reception result for the given information in a case where retransmission of the given information is performed by broadcast and multicast. The control section 210 may control reporting of the retransmission control information for the given information by employing resources separately configured for each terminal. The control section 210 may assume that the retransmission of the given information is performed by unicast.

(Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

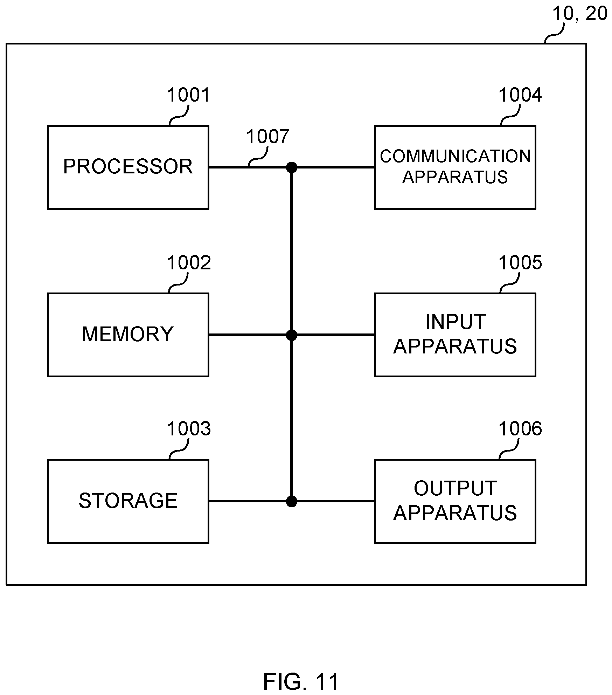

For example, a base station, a user terminal, and so on according to one embodiment of the present disclosure may function as a computer that executes the processes of the radio communication method of the present disclosure. FIG. 11 is a diagram to illustrate an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses illustrated in the drawings, or may be configured not to include part of apparatuses.

For example, although only one processor 1001 is illustrated, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be also referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be also referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twistedpair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on JP 2019-094078 A filed on May 17, 2019. The contents of the application are incorporated herein.

**Claims**

1. A user terminal comprising:

   a receiving section that receives given information transmitted by at least one of broadcast and multicast; and
   a control section that determines a transmission timing for retransmission control information for the given information, based on at least one of a predefined value and information transmitted from a network.

2. The user terminal according to claim 1, wherein

   the receiving section receives a candidate set of transmission timings for the retransmission control information for the given information, and
   the control section selects a given transmission timing, based on downlink control information commonly transmitted to given user terminals.

3. The user terminal according to claim 1, wherein
   the control section determines the transmission timing for the retransmission control information for the given information, based on a first transmission timing parameter reported through higher layer signaling and a second transmission timing parameter reported in downlink control information.

4. The user terminal according to any one of claims 1 to 3, wherein
   the control section determines a resource to be employed for transmission of the retransmission control information for the given information, based on a first resource parameter reported through higher layer signaling and a second resource parameter specified by employing at least one of higher layer signaling and downlink control information.

5. The user terminal according to any one of claims 1 to 4, wherein

   the control section receives a candidate set of resources to be employed to transmit the retransmission control information for the given information, and
   the control section selects a given resource, based on downlink control information commonly transmitted to given user terminals.

6. A radio communication method comprising:

   receiving given information transmitted by at least one of broadcast and multicast; and

determining a transmission timing for retransmission control information for the given information based on at least one of a predefined value and information transmitted from a network.

BASE STATION

BROADCAST/MULTICAST
TRANSMISSION

BROADCAST/MULTICAST
TRANSMISSION

UE GROUP #1

UE GROUP #2

FIG. 1

EP 3 972 365 A1

FIG. 2

BASE STATION

BROADCAST/MULTICAST
TRANSMISSION

HARQ-
ACK#A

BROADCAST/MULTICAST
TRANSMISSION

UE GROUP #1

HARQ-
ACK#B

UE GROUP #2

UNICAST TRANSMISSION

FIG. 3

EP 3 972 365 A1

BASE STATION

BROADCAST/MULTICAST
TRANSMISSION

BROADCAST/MULTICAST
TRANSMISSION

K11  K12

K21  K22

UE GROUP #1

UE GROUP #2

EP 3 972 365 A1

FIG. 4

BASE STATION

BROADCAST/MULTICAST
TRANSMISSION

BROADCAST/MULTICAST
TRANSMISSION

P11  P12          P21  P22

UE GROUP #1

UE GROUP #2

FIG. 5

FIG. 6

FIG. 7

FIG. 8

FIG. 9

EP 3 972 365 A1

FIG. 10

FIG. 11

**INTERNATIONAL SEARCH REPORT**

| International application No. |
| --- |
| PCT/JP2020/019322 |

A. CLASSIFICATION OF SUBJECT MATTER
H04W 72/04(2009.01)i; H04W 4/06(2009.01)i; H04W 28/04(2009.01)i
FI: H04W28/04 110; H04W72/04 131; H04W72/04 136; H04W4/06

According to International Patent Classification (IPC) or to both national classification and IPC

B. FIELDS SEARCHED

Minimum documentation searched (classification system followed by classification symbols)
H04W4/00-99/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2018/056108 A1 (KYOCERA CORP.) 29.03.2018 (2018-03-29) paragraphs [0119]-[0122] | 1, 6 |
| Y | paragraphs [0119]-[0122] | 1-6 |
| Y | WO 2018/158926 A1 (NTT DOCOMO, INC.) 07.09.2018 (2018-09-07) paragraphs [0016]-[0018], [0032], [0036] | 1-6 |
| Y | JP 2015-534394 A (INTEL CORPORATION) 26.11.2015 (2015-11-26) paragraphs [0043]-[0053] | 4-5 |

☐ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 July 2020 (16.07.2020) | 28 July 2020 (28.07.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/019322

| Patent Documents referred in the Report | Publication Date | Patent Family | Publication Date |
|---|---|---|---|
| WO 2018/056108 A1 | 29 Mar. 2018 | (Family: none) | |
| WO 2018/158926 A1 | 07 Sep. 2018 | US 2020/0015119 A1 paragraphs [0030]-[0032], [0046], [0050] CN 110574473 A | |
| JP 2015-534394 A | 26 Nov. 2015 | WO 2014/052730 A1 paragraphs [0043]-[0053] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019094078 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010